(19) Europäisches Patentamt
European Patent Office
Office européen des brevets

(11) **EP 4 701 312 A1**

(12) **EUROPEAN PATENT APPLICATION**
published in accordance with Art. 153(4) EPC

(43) Date of publication:
**25.02.2026 Bulletin 2026/09**

(21) Application number: **23933984.9**

(22) Date of filing: **17.04.2023**

(51) International Patent Classification (IPC):
***H04W 72/512*** *(2023.01)* ***H04W 48/16*** *(2009.01)*
***H04W 74/08*** *(2024.01)*

(52) Cooperative Patent Classification (CPC):
**H04W 48/16; H04W 72/512; H04W 74/08**

(86) International application number:
**PCT/JP2023/015381**

(87) International publication number:
**WO 2024/218837 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
- **TAKEDA, Daiki**
  **Tokyo 100-6150 (JP)**
- **SHIBAIKE, Naoya**
  **Tokyo 100-6150 (JP)**
- **HARADA, Hiroki**
  **Tokyo 100-6150 (JP)**
- **NAKAMURA, Takuma**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57) A terminal according to one aspect of the present disclosure includes: a control section that determines whether to use a terminal-dedicated resource, based on at least one of a request transmitted for the terminal-dedicated resource, information received for the terminal-dedicated resource, a state of the terminal, a use of the terminal-dedicated resource, a period related to the terminal-dedicated resource, and an event; and a transmitting section that transmits, when the control section determines to use the terminal-dedicated resource, a specific channel by using the terminal-dedicated resource.

UE
gNB
Msg1
Msg2

FIG. 5

EP 4 701 312 A1

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, 6G or later versions), it is considered to control latency, for example, reduce the amount of latency and guarantee the amount of latency, in comparison with that of existing radio communication systems, for several use cases.

However, a radio communication method for control of such latency has not been studied sufficiently. Unless an appropriate radio communication method is used, latency may not be controlled appropriately.

Thus, an object of the present disclosure is to provide a terminal, a radio communication method, and a base station that can appropriately control latency.

### Solution to Problem

A terminal according to one aspect of the present disclosure includes: a control section that determines whether to use a terminal-dedicated resource, based on at least one of a request transmitted for the terminal-dedicated resource, information received for the terminal-dedicated resource, a state of the terminal, a use of the terminal-dedicated resource, a period related to the terminal-dedicated resource, and an event; and a transmitting section that transmits, when the control section determines to use the terminal-dedicated resource, a specific channel by using the terminal-dedicated resource.

### Advantageous Effects of Invention

According to one aspect of the present disclosure, it is possible to appropriately control latency.

### Brief Description of Drawings

[FIG. 1] FIG. 1 shows an example of CBRA.
[FIG. 2] FIG. 2 shows an example of RACH configuration information elements.
[FIG. 3] FIGS. 3A and 3B show examples of association between PRACH occasions and beams.
[FIG. 4] FIG. 4 shows an example of CFRA.

[FIG. 5] FIG. 5 shows an example of shortening of a RA procedure.
[FIG. 6] FIG. 6 shows an example of a specific period for URLLC resources.
[FIG. 7] FIG. 7 is a diagram to show an example of a schematic structure of a radio communication system according to one embodiment.
[FIG. 8] FIG. 8 is a diagram to show an example of a structure of a base station according to one embodiment.
[FIG. 9] FIG. 9 is a diagram to show an example of a structure of a user terminal according to one embodiment.
[FIG. 10] FIG. 10 is a diagram to show an example of a hardware structure of the base station and the user terminal according to one embodiment.
[FIG. 11] FIG. 11 is a diagram to show an example of a vehicle according to one embodiment.

Description of Embodiments

(Initial Access Procedure)

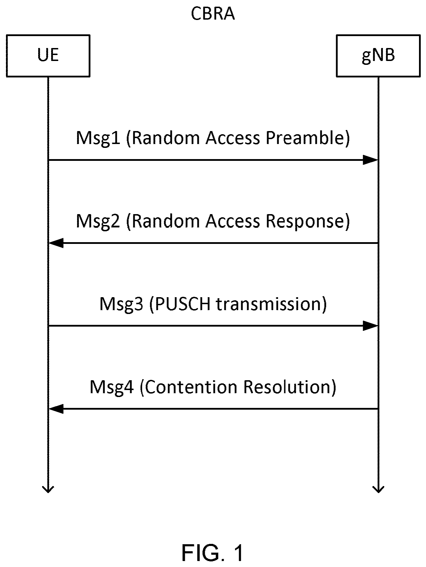

In an initial access procedure, a UE (RRC IDLE mode) performs reception of an SS/PBCH block (SSB), transmission of Msg. 1 (PRACH/random access preamble/preamble), reception of Msg. 2 (PDCCH, PDSCH including a random access response (RAR)), transmission of Msg. 3 (PUSCH scheduled by RAR UL grant), and reception of Msg. 4 (PDCCH, PDSCH including a UE contention resolution identity) (contention based random access, CBRA, FIG. 1). Subsequently, when the UE transmits ACK for Msg. 4 by a base station (network), RRC connection is established (RRC_CONNECTED mode).

The reception of an SSB includes PSS detection, SSS detection, PBCH-DMRS detection, and PBCH reception. The PSS detection performs detection of part of a physical cell ID (PCI), detection (synchronization) of OFDM symbol timing, and (coarse) frequency synchronization. The SSS detection includes detection of the physical cell ID. The PBCH-DMRS detection includes detection of (part of) an SSB index in a half radio frame (5 ms). The PBCH reception includes detection of a system frame number (SFN) and the radio frame timing (SSB index), reception of configuration information for remaining minimum system information (RMSI, SIB1) reception, and recognition of whether or not the UE can camp on a corresponding cell (carrier).

An SSB has a bandwidth of 20 RBs and time of four symbols. The transmission periodicity of the SSB can be configured from {5, 10, 20, 40, 80, 160} ms. In a half frame, a plurality of SSB symbol positions are defined, based on a frequency range (FR1, FR2).

A PBCH has payload of 56 bits. N PBCH repetitions are transmitted in periodicity of 80 ms. N depends on SSB transmission periodicity.

System information includes an MIB, RMSI (SIB1), and other system information (OSI) transmitted on a PBCH. SIB1 includes information for performing RACH configuration and a RACH procedure. A relationship of time/frequency resources between the SSB and a PDCCH monitoring resource for SIB1 is configured by the PBCH.

A base station using beam correspondence transmits a plurality of SSBs by using a plurality of respective beams per SSB transmission periodicity. The plurality of SSBs have a plurality of respective SSB indices. A UE that has detected one SSB transmits a PRACH in a RACH occasion associated with the corresponding SSB index and receives a RAR in a RAR window.

(PRACH)

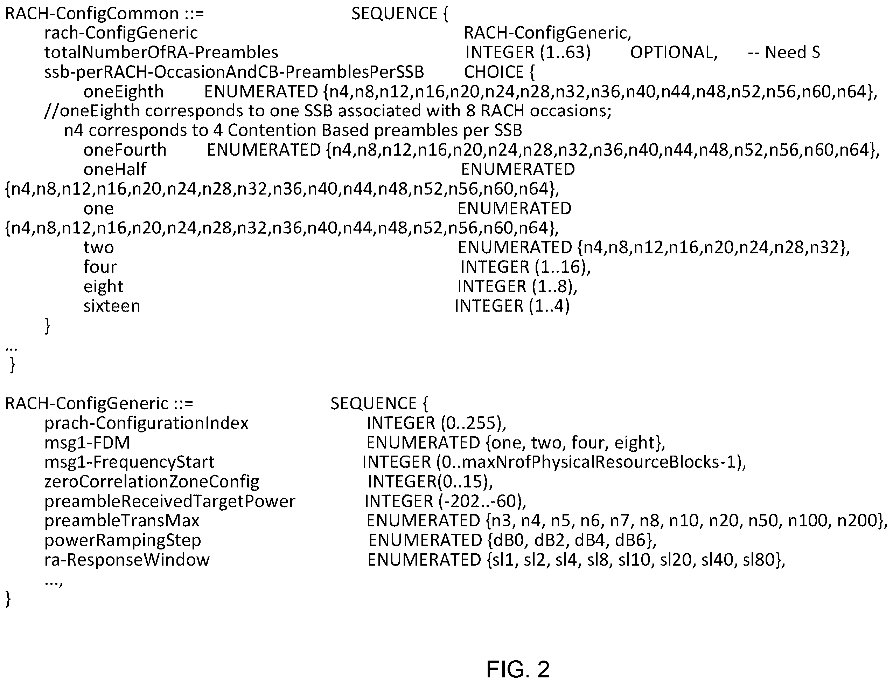

As in FIG. 2, a common RACH configuration (RACH-ConfigCommon) may include a generic RACH configuration (rach-ConfigGeneric), the total number of RA preambles (totalNumberOfRA-Preambles), and an SSB per RACH occasion and a contention-based (CB) preamble per SSB (ssb-perRACH-OccasionAndCB-PreamblesPerSSB). rach-Config-Generic may include a PRACH configuration index (prach-ConfigurationIndex) and message 1 FDM (msg1-FDM, the number of PRACH occasions FDMed in one time instance). ssb-perRACH-OccasionAndCB-PreamblesPerSSB may include the number of CB preambles per SSB for 1/8 of the number of SSBs per RACH occasion (oneEighth, one SSB is associated with eight RACH occasions).

To type 1 random access procedure (4-step random access procedure, message 1/2/3/4), the UE may be applied with the number N of SS/PBCH blocks associated with one PRACH occasion and the number R of CB preambles per SS/PBCH block per valid PRACH occasion by ssb-perRACH-OccasionAndCB-PreamblesPerSSB.

For Type 1 random access procedure or Type 2 random access procedure (2-step random access procedure, message A/B) with a configuration of a PRACH occasion independent from Type 1 random access procedure, if $N < 1$, one SS/PBCH block is mapped to 1/N consecutive valid RACH occasions, and R CB preambles with consecutive indices associated with an SS/PBCH block index per valid PRACH occasion start from preamble index 0. If $N \geq 1$, R CB preambles with consecutive indices associated with SS/PBCH block index n ($0 \leq n < -N - 1$) per valid PRACH occasion start from preamble index n N_preamble^total/N. Here, N_preamble^total is given by totalNumberOfRA-Preambles for Type 1 random access procedure and is given by msgA-TotalNumberOfRA-Preambles for Type 2 random access procedure with a PRACH occasion configuration independent from Type 1 random access procedure. N_preamble^total is a multiple of N.

An association period starting from frame 0 for mapping an SS/PBCH block to a PRACH occasion is the smallest value in a set determined by a PRACH configuration period according to a relationship (relationship defined in a specification) between a PRACH configuration period and the association period (the number of PRACH configuration periods) so that $N_{Tx}^{SSB}$ SS/PBCH block indices are mapped to a PRACH occasion at least once in the association period. Here, the UE obtains $N_{Tx}^{SSB}$ from a value of SSB positions in burst (ssb-PositionsInBurst) in SIB1 or in a common serving cell configuration (ServingCellConfigCommon). If a set of PRACH occasions or PRACH preambles not mapped to $N_{Tx}^{SSB}$ SS/PBCH block indices is present after an integral number of mapping cycles from SS/PBCH block indices to PRACH occasions in the association period, none of the SS/PBCH block indices is mapped to the set of PRACH occasions or PRACH preambles. An association pattern period is determined to include one or more association periods and repeat a pattern between PRACH occasions and SS/PBCH block indices every 160 ms at most. If a PRACH occasion not associated with any SS/PBCH block index after the integral number of times is present, the PRACH occasion is not used for a PRACH.

In a case of PRACH transmission triggered by a higher layer (PRACH transmission not triggered by a PDCCH order), if ssb-ResourceList is provided, a PRACH mask index is indicated by ra-ssb-OccasionMaskIndex. ra-ssb-OccasionMaskIndex above indicates the PRACH occasion for PRACH transmission associated with a selected SS/PBCH block index.

PRACH occasions are mapped consecutively per corresponding SS/PBCH block index. Indexing of PRACH occasions indicated by mask index values is reset every SS/PBCH block index, every mapping cycle of consecutive PRACH occasions. The UE selects a PRACH occasion indicated by the PRACH mask index value corresponding to an indicated SS/PBCH block index, for PRACH transmission, in the first available mapping cycle.

For an indicated preamble index, the order of PRACH occasions are as follows.

- First, an increase order of frequency resource indices for frequency multiplexed PRACH occasions.
- Second, an increase order of time resource indices for time multiplexed PRACH occasions in a PRACH slot.
- Third, an ascending order of indices of PRACH slots.

If csirs-ResourceList is provided for PRACH transmission triggered by a request from a higher layer, a value of ra-OccasionList indicates a list of PRACH occasions for PRACH transmission, and the PRACH occasions are associated with CSI-RS indices indicated and selected by csi-RS. Indexing of the PRACH occasions indicated by ra-OccasionList is reset every association pattern period.

For PRACH configuration periods 10, 20, 40, 80, and 160 [msec], the association periods are {1, 2, 4, 8, 16}, {1, 2, 4, 8}, {1, 2, 4}, {1, 2}, and {1}, respectively.

A value of the PRACH mask index value (msgA-SSB-SharedRO-MaskIndex) is associated with an SSB-permitted PRACH occasion (value of a PRACH occasion index).

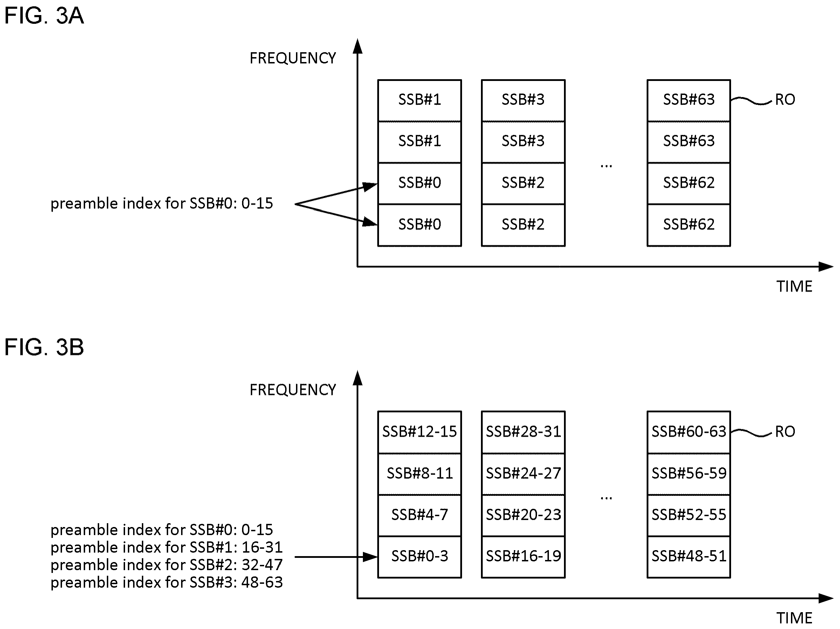

FIG. 3A shows an example (mapping 1) of association between PRACH occasions (RACH occasions (ROs)) and beams (SSBs/CSI-RSs) based on a higher layer parameter ssb-perRACH-OccasionAndCB-PreamblesPerSSB. When ssb-perRACH-OccasionAndCB-PreamblesPerSSB indicates oneHalf, n16 (N = 1/2, R = 16) and msg1-FDM is 4, four ROs are FDMed to one time instance, and one SSB is mapped to two ROs. Preamble indices 0 to 15 are associated with the two ROs, and preamble indices 0 to 15 are associated with SS0B. Thus, when N < 1, one SSB is mapped to a plurality of ROs. This increases the capacity of ROs per beam.

FIG. 3B shows an example (mapping 2) of association between ROs and beams based on a higher layer parameter ssb-perRACH-OccasionAndCB-PreamblesPerSSB. When ssb-perRACH-OccasionAndCB-PreamblesPerSSB indicates n4, n16 (N = 4, R = 16), msg1-FDM is 4, and N_preamble^total is 64, four ROs are FDMed to one time instance, and four SSBs are mapped to one RO. SSBs #0 to #3 are associated with one RO. Preamble indices #0 to #15 are associated with SSB #0, preamble indices #16 to #31 are associated with SSB #1, preamble indices #32 to #47 are associated with SSB #2, and preamble indices #48 to #63 are associated with SSB #3. Thus, the same RO is associated with different SS/PBCH block indices, and different preambles use different SS/PBCH block indices. A base station can identify an associated SS/PBCH block indices by a received PRACH.

A random access preamble can be transmitted only in a time resource defined in a random access preamble configuration in a specification and depends on whether it is FR1 or FR2 and on a spectrum type (paired spectrum/supplementary uplink (SUL)/unpaired spectrum). A PRACH configuration index is given by a higher layer parameter prach-ConfigurationIndex or msgA-PRACH-ConfigurationIndex if configured. In a specification, each value of PRACH configuration indices is associated with at least one of a preamble format, x and y in n_f (frame number) mod x = y, a subframe number, a start symbol, the number of PRACH slots in a subframe, the number N_t^RA_slot of time-domain PRACH occasions in a PRACH slot, and a PRACH duration N_dur^RA.

The type of a RACH procedure to be triggered is different depending on whether PRACH repetition is applied to a scenario and for a different purpose. The type of the RACH procedure may be at least one of the following:

- contention-free random access (CFRA), PDCCH ordered RA (RA initiated by a PDCCH order), CFRA for beam failure recovery (BFR), CFRA for system information (SI) request, CFRA for reconfiguration with synchronization (sync), and the like.
- contention-based random access (CBRA), RA triggered by a MAC entity, RA triggered by RRC with an event, CBRA for BFR, and the like.
- 4-step RACH.
- 2-step RACH.

(PDCCH Order)

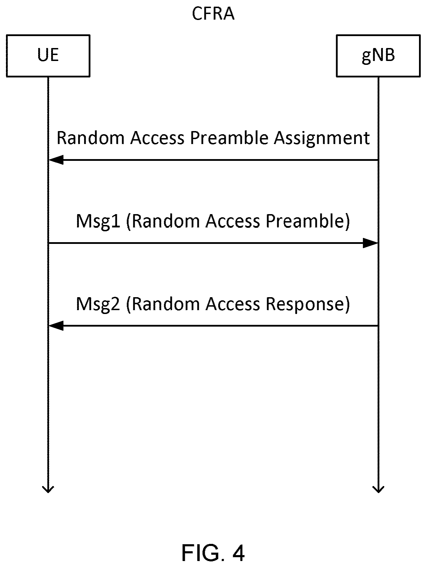

DCI format 1_0 includes an identifier field of the DCI format, a bit field always set at 1, and a frequency domain resource assignment field. When cyclic redundancy check (CRC) of DCI format 1_0 is scrambled with a C-RNTI, and the frequency domain resource assignment field is all set at 1, DCI format 1_0 is for random access procedure initiated by a PDCCH order (contention-free random access CFRA, FIG. 4) while the other fields correspond to a random access preamble, a UL/supplementary Uplink (SUL) indicator, an SS/PBCH index (SSB index), a PRACH mask index, and reserved bits (12 bits).

In a case of PRACH transmission triggered by a PDCCH order, when the value of the random access preamble index field (RACH preamble assignment) is not zero, the PRACH mask index field indicates that a PRACH occasion is a PRACH occasion for PRACH transmission associated with the SS/PBCH block index indicated by the SS/PBCH block index of the PDCCH order.

(Random Access Procedure in MAC Entity (MAC protocol specification: Random Access procedure initialization))

A random access procedure is initiated by a PDCCH order, a MAC entity itself, or RRC for an event conforming to a specification. Only one random access procedure is in progress at any time point in a MAC entity. The random access procedure of an SCell is initiated only by a PDCCH order with ra-PreambleIndex different from 0b000000.

When the random access procedure is initiated in a serving cell, the MAC entity performs the following. - When the random access procedure is initiated by a PDCCH order, and ra-PreambleIndex explicitly provided by a PDCCH is not 0b000000, or when the random access procedure is initiated for reconfiguration with synchronization, and 4-step RA type contention-free random access resource is explicitly provided by rach-ConfigDedicated for a BWP selected for the random access procedure, RA_TYPE is configured at 4-stepRA.

When selected RA_TYPE is configured at 4-stepRA, the MAC entity performs the following.

- ra-PreambleIndex is explicitly provided by the PDCCH, and ra-PreambleIndex is not 0b000000, the MAC entity sets PREAMBLE_INDEX at notified ra-PreambleIndex and selects an SSB notified by the PDCCH.
- When an SSB is selected as described above, the next available PRACH occasion is determined from PRACH occasions permitted based on restriction given by ra-ssb-OccasionMaskIndex and corresponding to the selected SSB (MAC entity randomly selects a PRACH occasion from consecutive PRACH occasions corresponding to the selected SSB at an equal probability according to a specification. When the MAC entity determines the next available PRACH occasion corresponding to the selected SSB, the MAC entity may consider the possibility of occurrence of a measurement gap).

(Time between PDCCH Order Reception and PRACH Transmission)

If a random access procedure is initiated by a PDCCH order, a UE transmits, if requested by a higher layer, a PRACH in a selected PRACH occasion for a case where the time between the last symbol of PDCCH order reception and the first symbol of PRACH transmission is equal to or longer than N_(T, 2) + Δ_BWPSwitching + Δ_Delay + T_switch [msec] (time condition) as described in a specification. Her, N_(T, 2) denotes the duration of N_2 symbols corresponding to a PUSCH preparation time of UE processing capability 1. Assume that μ corresponds to the smallest SCS configuration between a subcarrier spacing (SCS) configuration of the PDCCH order and an SCS configuration of corresponding PRACH transmission. When an active UL BWP does not change, Δ_BWPSwitching = 0, and Δ_BWPSwitching is defined in a specification otherwise. In FR1, Δ_delay = 0.5 msec, and in FR2, Δ_delay = 0.25 msec. T_switch denotes switching gap duration defined in a specification.

(Validity (valid)/Invalidity (invalid) Condition of PRACH Occasion (validity condition))

All PRACH occasions are valid in a paired spectrum (FDD) or an SUL band. In an unpaired spectrum (TDD), a PRACH occasion may follow definitions 1 and 2 below.

{Definition 1}

In a case where a UE is not provided with tdd-UL-DL-ConfigurationCommon, when a PRACH occasion in a PRACH slot does not precede an SS/PBCH block in the PRACH slot and is initiated at least N_gap symbols after the last SS/PBCH block reception symbol, the PRACH occasion is valid. Here, N_gap is defined in a specification. When channelAccessMode = semistatic is provided, this does not overlap a set of consecutive symbols prior to the start of the channel occupying time in which the UE does not perform transmission. A candidate SS/PBCH block index of the SS/PBCH block corresponds to an SS/PBCH block index provided by ssb-PositionsInBurst in SIB1 or ServingCellConfigCommon.

{Definition 2}

In a case where a UE is provided with tdd-UL-DL-ConfigurationCommon, the PRACH occasion in a PRACH slot is valid in the following cases.

- the PRACH occasion is in UL symbols or
- the PRACH occasion does not precede an SS/PBCH block in the PRACH slot and is initiated at least N_gap symbols after the last DL symbol and at least N_gap symbols after the last SS/PBCH block symbol Here, N_gap is defined in a specification. If channelAccessMode = semistatic is provided, the PRACH occasion does not overlap a set of consecutive symbols prior to the start of the next channel occupying time in which no transmission is to be performed, as described in a specification. A candidate SS/PBCH block index of the SS/PBCH block corresponds to an SS/PBCH block index provided by ssb-PositionsInBurst in SIB1 or ServingCellConfigCommon, as described in a specification.

(RAR Window)

A RA response window (ra-ResponseWindow) is a time window for monitoring a RA response (RAR) (only special cell (SpCell)). RA contention resolution timer (ra-ContentionResolutionTimer) is a timer for RA contention resolution (only SpCell). A Msg. B response window is a time window for monitoring a RA response (RAR) only for 2-step RA type (only SpCell).

In the present disclosure, an SpCell, a primary cell (PCell), and a primary secondary cell (PSCell) may be interchangeably interpreted.

When a RA preamble is transmitted, a MAC entity performs operations 1 to 3 below irrespective of the possibility of occurrence of a measurement gap.

{Operation 1}

If a contention-free RA preamble for BFR request is transmitted by the MAC entity, the MAC entity performs operations 1-1 and 1-2 below.

{{Operation 1-1}} The MAC entity initiates ra-ResponseWindow configured in a BFR configuration (BeamFailureRecoveryConfig) in the first PDCCH occasion from the end of RA preamble transmission.

{{Operation 1-2}} The MAC entity monitors PDCCH transmission in a search space indicated by a search space ID for BFR (recoverySearchSpaceId) of the SpCell identified by a C-RNTI while ra-ResponseWindow is in operation.

{Operation 2}

Otherwise, the MAC entity performs operations 2-1 and 2-2 below.

{{Operation 2-1}} The MAC entity initiates ra-ResponseWindow configured in a common RACH configuration (RACH-ConfigCommon) in the first PDCCH occasion from the end of RA preamble transmission.

{{Operation 2-2}} The MAC entity monitors PDCCH transmission of the SpCell for RAR identified by a RA-RNTI while ra-ResponseWindow is in operation.

{Operation 3}

If ra-ResponseWindow configured in BeamFailureRecoveryConfig expires, and PDCCH transmission in the search space indicated by recoverySearchSpaceId addressed to a C-RNTI is received in the serving cell in which the preamble is transmitted, or if ra-ResponseWindow configured in RACH-ConfigCommon expires, and a RAR including the RA preamble identifiers matching the transmitted preamble index (PREAMBLE_INDEX) is received, the MAC entity regards the RAR reception as a failure and increments a preamble transmission counter (PREAMBLE_TRANSMISSION_COUNTER) by 1.

The MAC entity may stop ra-ResponseWindow (stop monitoring for RAR) after success in reception of the RAR including the RA preamble identifiers matching transmitted PREAMBLE_INDEX.

For PDCCH monitoring in a RA response window, there are two cases, i.e., a PDCCH for a response of a base station to BFR and a PDCCH for RAR. The following contents may be applied to both of the cases.

When a MSGA (Msg. A) preamble is transmitted, a MAC entity performs operations 4 to 6 below irrespective of the possibility of occurrence of a measurement gap.

{Operation 4}

The MAC entity initiates a Msg. B response window (msgB-ResponseWindow) in a PDCCH monitoring window defined in a specification.

msgB-ResponseWindow may be initiated at the first symbol of the earliest CORESET configured for the UE to receive a PDCCH for a type 1-PDCCH CSS set being at least one symbol after the last symbol of the PRACH occasion corresponding to PRACH transmission. The length of msgB-ResponseWindow may correspond to an SCS for type 1-PDCCH CSS set.

{Operation 5}

The MAC entity monitors PDCCH transmission of the SpCell for RAR identified by a MSGB-RNTI while msgB-ResponseWindow is in operation.

{Operation 6}

If a C-RNTI MAC CE is included in the MSGA, the MAC entity monitors PDCCH transmission of the SpCell for RAR identified by a C-RNTI while msgB-ResponseWindow is in operation.

(RA-RNTI (MAC protocol specification: Random Access Preamble transmission))

A RA-RNTI associated with a PRACH occasion in which a RA preamble is transmitted is calculated as follows.

RA-RNTI = 1 + s_id + 14 x t_id + 14 x 80 x f_id + 14 x 80 x 8 x ul_carrier_id

Here, s_id denotes the index of the first OFDM symbol of the PRACH occasion ($0 \leq$ s_id < 14 (the number of symbols in a slot)). t_id denotes the index of the first slot of the PRACH occasion in a system frame ($0 \leq$ t_id < 80 (the number of slots in the system frame when SCS is 120 kHz)). Subcarrier spacing (SCS) for determination of t_id is based on the value of $\mu$. f_id denotes the index of the PRACH occasion in the frequency domain ($0 \leq$ f_id < 8 (the maximum number of PRACH occasions to be FDMed)). ul_carrier_id is a UL carrier used for RA preamble transmission (0 for normal uplink (NUL) carrier, 1 for supplementary uplink (SUL) carrier). A RA-RNTI is calculated according to a specification. The RA-RNTI is an RNTI for 4-step RACH.

A MSGB-RNTI associated with a PRACH occasion in which a RA preamble is transmitted is calculated as follows.

MSGB-RNTI = 1 + s_id + 14 x t_id + 14 x 80 x f_id + 14 x 80 x 8 x ul_carrier_id + 14 x 80 x 8 x 2

Here, s_id denotes the index of the first OFDM symbol of the PRACH occasion ($0 \leq$ s_id < 14). t_id denotes the index of the first slot of the PRACH occasion in a system frame ($0 \leq$ t_id < 80). Subcarrier spacing (SCS) for determination of t_id is based on the value of $\mu$. f_id denotes the index of the PRACH occasion in the frequency domain ($0 \leq$ f_id < 8). ul_carrier_id is a UL carrier used for RA preamble transmission (0 for normal uplink (NUL) carrier, 1 for supplementary uplink (SUL) carrier). The MSGB-RNTI is an RNTI for 2-step RACH.

The total number of RA-RNTI values (the total number of PRACH occasions in the system frame) is 14 x 80 x 8 x 2.

The equation for MSGB-RNTI is obtained by adding the total number of RA-RNTI values to the equation for RA-RNTI. According to this equation, collision of a MSGB-RNTI and a RA-RNTI can be avoided.

(RAR Monitoring)

In response to PRACH transmission, a UE attempts to detect DCI format 1_0 with CRC scrambled with a corresponding RA-RNTI in a window controlled by a higher layer described above. At the first symbol of the earliest CORESET configured for the UE to receive a PDCCH for a type 1-PDCCH CSS set, i.e., at least one symbol after the last symbol of the PRACH occasion corresponding to the PRACH transmission, the window is initiated. The symbol period of the window corresponds to SCS for the type 1-PDCCH CSS set. The length of the window is provided as the number of slots by ra-responseWindow, based on the SCS for the type 1-PDCCH CSS set.

If the UE has detected DCI format 1_0 with CRC scrambled with the corresponding RA-RNTI and the same least significant bits (LSBs) of a system frame number (SFN) field in the DCI format as the LSBs of an SFN where the UE has transmitted the PRACH, and the UE has received a transport block in a corresponding PDSCH, the UE may assume the same DMRS antenna port QCL properties for an SS/PBCH block or a CSI-RS resource to be used by the UE for PRACH association, irrespective of whether or not the UE is provided with a TCI state (TCI-State) for CORESET for receiving the PDCCH with this DCI format 1_0.

If the UE attempts to detect DCI format 1_0 with CRC scrambled with the corresponding RA-RNTI in response to PRACH transmission initiated by a PDCCH order triggering a CFRA procedure for an SpCell, the UE may assume that the PDCCH including this DCI format 1_0 and the PDCCH order have the same DMRS antenna port QCL properties. If the UE attempts to detect DCI format 1_0 with CRC scrambled with the corresponding RA-RNTI in response to PRACH transmission initiated by a PDCCH order triggering a CFRA procedure for a secondary cell, the UE may assume the DMRS antenna port QCL properties of the CORESET associated with the type 1-PDCCH CSS set for reception of the PDCCH including this DCI format 1_0.

A RAR UL grant may include at least one of a frequency hopping flag field, a PUSCH frequency resource allocation field, a PUSCH time resource allocation field, a modulation and coding scheme (MCS) field, a TPC command field for PUSCH, a CSI request field, and a channel access-cyclic prefix extension (CPext) field.

In a single-cell operation or an operation with carrier aggregation in the same frequency band, if qcl-Type set a 'type D' properties of a DMRS for monitoring a PDCCH in a type 1-PDCCH CSS set is not configured to be the same as qcl-Type set at 'type D' properties of a DMRS for monitoring of a PDCCH in a type 0/0A/0B/2/3-PDCCH CSS set or in a USS set, and the PDCCH or an associated PDSCH overlaps a PDCCH monitored by the UE in the type 1-PDCCH CSS set or an associated PDSCH at least one symbol, the UE assumes to monitor a PDCCH in the type 0/0A/0B/2/3-PDCCH CSS set or in the USS set.

If the UE is provided with one or more search space sets by a corresponding one or more of searchSpaceZero, searchSpaceSIB1, searchSpaceOtherSystemInformation, pagingSearchSpace, peiSearchSpace, ra-SearchSpace, and a CSS set and also is provided with an SI-RNTI, a P-RNTI, a PEI-RNTI, a RA-RNTI, a MsgB-RNTI, an SFI-RNTI, an INT-RNTI, a TPC-PUSCH-RNTI, a TPC-PUCCH-RNTI, or a TPC-SRS-RNTI by PDCCH-Config, the UE does not assume to process, for any RNTI of these RNTIs, information from more than one DCI formats with CRC scrambled with the RNTI per slot.

(Msg3 PUSCH)

A UE transmits a transport block in a PUSCH scheduled by a RAR_UL grant in a RAR message. The UE transmits the PUSCH in slot $n + k_2 + \Delta + 2^{\mu} \cdot K_{cell,offset}$. In $K_{cell,offset}$, provision is made by CellSpecific_Koffset in $K_{cell,offset}$, and $K_{cell,offset} = 0$ if no provision is made.

$k_2$ denotes a slot offset and is determined based on row index m + 1 of an allocation table provided by PUSCH time resource allocation field value m of a RAR UL grant and a PUSCH with PUSCH subcarrier spacing uPUSCH. $\Delta$ denotes an additional subcarrier spacing-specific slot delay time value for the first transmission of a PUSCH scheduled by a RAR, is specific to a PUSCH with PUSCH subcarrier spacing $\mu$PUSCH, and is added to $K_2$ for application.

If the UE requests repetition for PUSCH transmission, the UE transmit a PUSCH across $N_{PUSCH}^{repeat}$ slots. Here, $N_{PUSCH}^{repeat}$ is indicated by a RAR UL grant or two MSBs of an MCS field in DCI format 0_0, from a set of four values provided by numberOfMsg3Repetitions or from {1, 2, 3, 4} if numberOfMsg3Repetitions is not provided.

The UE determines whether to apply Msg3 repetition, based on an RSRP. When Msg repetition is configured and a DL pathloss reference RSRP is smaller than rsrp-ThresholdMsg3 (threshold), a MAC entity assumes that Msg3 repetition is applicable to a current random access (RA) procedure.

The UE can request Msg3 PUSCH repetition via a dedicated PRACH resource. When one or more sets of available RA resources are present and one of the one or more sets are used for indication of all the functions triggering this RA procedure, and when one or more sets of available RA resources configured with indication for a subset of all the functions triggering this RA procedure are present, the MAC entity selects a RA resource. When Msg3 repetition is not available in a case where Msg3 repetition indication is configured for the set of RA resources, the MAC entity regards the set of RA resources as not being available for the RACH procedure.

RA resources may be partitioned for each feature. The features may include at least one of Msg3 repetition, reduced capacity (RedCap), small data transmission (SDT), and RAN slicing.

In SIB1 transmitted by a base station, the following is notified.

- Priority of each feature (priority, featurePriorities-r17). This priority is used for determination of which of Feature-CombinationPreambles the UE is to use when a given feature is mapped to more than one FeatureCombination-Preambles (feature combination preamble configuration).
- Additional RO configuration. The configuration includes an available feature(s) (which may be associated with a plurality of features), a RA resource (for example, a preamble index), and a mask index for distinguishing ROs.

The UE determines an RO to use, depending on the feature.

SIB1 includes ServingCellConfigCommonSIB. This includes UplinkConfigCommonSIB. This includes BWP-UplinkCommon (UL BWP common configuration).

BWP-UplinkCommon may include a RACH common configuration (RACH-ConfigCommon or MsgA-Config-Common), and additionalRACH-ConfigList-r17 (additional RACH configuration list). additionalRACH-ConfigList-r17 may include rsrp-ThresholdMsg3-r17 (threshold).

The RACH common configuration may include FeatureCombinationPreambles. FeatureCombinationPreambles associates one set (partition) of preambles with one feature combination. FeatureCombinationPreambles may include FeatureCombination (feature combination configuration), startPreambleForThisPartition (first preamble index). numberOfPreamblesPerSSB-ForThisPartition (the number of preambles), and ssb-SharedRO-MaskIndex-r17 (PRACH mask index). FeatureCombination includes at least one of redCap (RedCap), smallData (SDT), sliceGroup (RAN slicing), and msg3-Repetition (Msg3 repetition). The partition is given by the index of the first preamble and the number of preambles.

By the PRACH mask index, an available RO(s) is explicitly configured. By using the relationship between the PRACH mask index and a PRACH occasion (RO) for which an SSB is permitted (table of MAC protocol specifications/PRACH mask index values), at least one of PRACH occasion indices 1 to 8 can be configured.

The number of Msg3 repetitions is indicated by 2 most significant bits (MSBs) of the modulation and coding scheme (MCS) field in a RAR UL grant.

In PUSCH repetition type A, when a PUSCH scheduled by a RAR UL grant is transmitted, 2 MSBs of the MCS information field of the RAR UL grant provides a codepoint for determination of the number K of repetitions according to the relationship (table) between the value (codepoint) of 2 MSBs of the MCS information field and the number K of repetitions, based on whether or not a higher layer parameter numberOfMsg3Repetitions is configured. The number N of slots to be used for determination of a transport block size (TBS) is equal to one.

In PUSCH repetition type B, when a PUSCH scheduled by a DCI format 0_0 with CRC scrambled with a TC-RNTI is transmitted, 2 MSBs of the MCS information field of the DCI format provides a codepoint for determination of the number K of repetitions according to the relationship (table) between the value (codepoint) of 2 MSBs of the MCS information field and the number K of repetitions, based on whether or not a higher layer parameter numberOfMsg3Repetitions is configured. The number N of slots to be used for TBS determination is equal to 1.

(Contention Resolution)

When Msg3 is transmitted, a MAC entity follows operations 1 to 4 below.

{Operation 1} If Msg3 is transmitted on a non-ground network, the MAC entity starts ra-ContentionResolutionTimer and restarts ra-ContentionResolutionTimer in each HARQ retransmission in the first symbol after addition of UE estimation of UE-gNB RTT to end of Msg3.

{Operation 2} Otherwise, if the Msg3 transmission (first transmission or HARQ retransmission) is scheduled with type A PUSCH repetition, the MAC entity starts or restarts ra-ContentionResolutionTimer in the first symbol after the end of all the repetitions of the Msg3 transmission.

{Operation 3} Otherwise, the MAC entity starts or restarts ra-ContentionResolutionTimer in the first symbol after the end of the Msg3 transmission.

{Operation 4} The MAC entity monitors a PDCCH while ra-ContentionResolutionTimer is in operation irrespective of the possibility of occurrence of a measurement gap.

Step 4 (Msg4) in a Rel-16 NR RA procedure follows step-4 operation below.

{Step-4 Operation}

When a UE is not provided with a C-RNTI, in response to PUSCH transmission scheduled by a RAR UL grant, a UE attempts to detect DCI format 1_0 with CRC scrambled with a corresponding TCI-RNTI for scheduling a PDSCH including UE contention resolution identity. In response to reception of the PDSCH including the UE contention resolution identity, the UE transmits HARQ-ACK information in a PUCCH. PUCCH transmission is in the same active UL BWP as that for PUSCH transmission. The minimum time between the last symbol of the PDSCH reception and the first symbol of the corresponding PUCCH transmission including HARQ-ACK information is equal to N_T, 1 [msec]. N_T, 1 denotes duration of N_T, 1 symbols equivalent to a PDSCH processing time of UE processing capability 1 of a case where an additional PDSCH DM-RS is configured. For $\mu = 0$, the UE assumes N_T, 1 = 14.

When a DCI format is detected in response to PUSCH transmission scheduled by the RAR UL grant or corresponding PUSCH retransmission scheduled by DCI format 0_0 with CRC scrambled with a TC-RNTI provided to a RAR message, the UE may assume that the PDCCH transferring the DCI format has the same DM-RS antenna port quasi co-location (QCL) properties as the DM-RS antenna port QCL properties for an SS/PBCH block used for PRACH association by the UE, irrespective of whether or not the TCI state for the CORESET in which the UE has received the PDCCH with the DCI format is provided to the UE.

(SSB/CSI-RS Selection (MAC protocol specification: Random Access Resource selection))

When RA type (RA_TYPE) is set at 4-stepRA, the MAC entity performs the following operations.

- When a RA procedure is initiated for SpCell beam failure recovery, also a beam failure recovery timer (beamFailureRecoveryTimer) is in operation or not configured, a CFRA resource or a beam failure recovery request associated with at least one SSB/CSI-RS is provided explicitly by RRC, and also at least one of one or more SSBs with an SS-RSRP exceeding an SS-RSR threshold (rsrp-ThresholdSSB) among a plurality of SSBs in a candidate beam RS list (candidateBeamRSList) and one or more CSI-RSs with a CSI-RSRP exceeding a CSI-RSRP threshold (rsrp-ThresholdCSI-RS) among a plurality of CSI-RSs in a candidate beam RS list (candidateBeamRSList) is available, the MAC entity performs the following operations.

  -- The MAC entity selects one SSB with an SS-RSRP exceeding rsrp-ThresholdSSB among the plurality of SSBs in candidateBeamRSList or one CSI-RSRP exceeding rsrp-ThresholdCSI-RS among the plurality of CSI-RSs in candidateBeamRSList.
  -- If a CSI-RS is selected and also a RA preamble index (ra-PreambleIndex) associated with the selected CSI-RS is present, the MAC entity sets the preamble index (PREAMBLE_INDEX) at ra-PreambleIndex corresponding to the SSB quasi-colocated (QCLed) with the selected CSI-RS in candidateBeamRSList.
  -- Otherwise, the MAC entity sets PREAMBLE _INDEXat ra-PreambleIndex corresponding to an SSB or a CSI-RS selected from the set of RA preambles for beam failure recovery request.

- Otherwise, when ra-PreambleIndex is explicitly provided by the PDCCH, and also ra-PreambleIndex is not 0b000000, the MAC entity sets PREAMBLE_INDEX at notified ra-PreambleIndex and selects an SSB notified by the PDCCH.
- Otherwise, when a CFRA resource associated with a plurality of SSBs is explicitly provided in a dedicated RACH configuration (rach-ConfigDedicated) and at least one SSB with an SS-RSRP exceeding rsrp-ThresholdSSB is available, the MAC entity selects one SSB with the SS-RSRP exceeding rsrp-ThresholdSSB from among the plurality of associated SSBs and sets PREAMBLE _INDEX at ra-PreambleIndex corresponding to the selected SSB.
- Otherwise, when a CFRA resource associated with a plurality of CSI-RSs is explicitly provided in a dedicated RACH configuration (rach-ConfigDedicated) and at least one CSI-RS with a CSI-RSRP exceeding rsrp-ThresholdCSI-RS among the plurality of CSI-RSs is available, the MAC entity selects one CSI-RS with the CSI-RSRP exceeding rsrp-ThresholdCSI-RS from among the plurality of associated CSI-RSs and sets PREAMBLE_INDEXat ra-PreambleIndex corresponding to the selected CSI-RS.
- Otherwise, when a RA procedure is initiated in response to an SI request and a RA resource for SI request is provided explicitly by RRC, the MAC entity performs the following operations.

  -- If at least one SSB with an SS-RSRP exceeding rsrp-ThresholdSSB is available, the MAC entity selects one SSB with the SS-RSRP exceeding rsrp-ThresholdSSB.
  -- Otherwise, the MAC entity selects any SSB.
  -- The MAC entity selects a RA preamble corresponding to the selected SSB from RA preambles approved according to a RA preamble start index (ra-PreambleStartIndex) and sets PREAMBLE _INDEX to the selected RA preamble.

- Otherwise (CBRA preamble selection), the MAC entity performs the following operations.

  -- If at least one SSB with an SS-RSRP exceeding rsrp-ThresholdSSB is available, the MAC entity selects one SSB with the SS-RSRP exceeding rsrp-ThresholdSSB.
  -- Otherwise, the MAC entity selects any SSB.

The initial access procedure and the RA procedure described above are based on 5G.

(Ultra-low Latency)

As a requirement for a future radio communication system such as 6G, ultra-low latency is studied. For example, it is studied that end-to-end (E2E) latency is approximately 1 ms or shorter, the latency of a radio access section is 0.1 ms or shorter, low latency is maintained stably and constantly, and the like.

An instantaneous value of the amount of latency taking into account of fluctuations of latency and the like is considered to significantly affect provision of services including design of a buffer size and the like. In 5G or previous versions, a requirement related to latency is defined as a statistical average value (best effort type) of the amount of latency. In 6G or later versions, it is also conceivable that a quality assurance type requirement is configured in consideration of fluctuations of latency.

By following 5G approach, it is conceivable to achieve advancement of low latency by numerology, for example, further low latency by compressing a frame structure in a time direction by using larger subcarrier spacing (SCS). For example, by increasing SCS from 15 Hz to 30 Hz, 60 Hz, 120 Hz, ..., the length of one slot (14 symbols) decreases from 1 ms to 0.5 ms, 0.25 ms, 0.125 ms, ... Meanwhile, it is conceivable that the decrease amount of latency is not sufficient only by numerology. The random access procedure in 5G assumes collision. To reduce the amount of latency including fluctuations of latency, it is considered to re-examine a design/signal/channel assuming error prior to 5G and collision.

As a requirement related to ultra-low latency, a use case of a combination of ultra-low latency and high reliability, for example, 6G Ultra-Reliable and Low Latency Communications (URLLC), is possibly defined. As a requirement related to ultra-low latency, a use case of a combination of ultra-low latency and multi-connection, for example, a use case such as a drone for which provision of multi-connection with a strict requirement for control latency is assumed, is possibly defined.

In 5G, for a random access (RA) procedure in an initial access procedure, CBRA assuming that PRACHs of a plurality of UEs collide at a given probability is used. Since the plurality of UEs each select a RACH preamble randomly, collision of preambles may occur if the plurality of UEs select the same sequence coincidently. When a collision occurs, the UEs need to perform retransmission, and hence CBRA may prevent a latency requirement.

For 6G URLLC, it is conceivable to achieve a RA procedure with no occurrence of collision and retransmission and achieve low latency by simplifying a RA procedure as much as possible, for example, reduce the number of messages from Msg1 to Msg4. It is also conceivable to achieve more effective RA procedure as the entire system by simplifying a procedure compared to existing CFRA in 5G, as a RA procedure with no occurrence of collision and retransmission, and using a UE-dedicated resource for 6G URLLC for a different use. In 6G URLLC having the possibility of continuous connection of a large number of devices, CFRA allocating RACH preambles in a UE-dedicated manner has a possibility of insufficient flexibility such as an insufficient number of preambles.

Hence, operation related to ultra-low latency is not sufficiently studied. Unless such operation is clear, a requirement may not be satisfied.

Thus, the inventors of the present invention came up with the idea of a radio communication method for ultra-low latency.

Embodiments according to the present disclosure will be described in detail with reference to the drawings as follows. Note that the embodiments (for example, the cases) below may each be employed individually, or may be employed in combination of at least two.

In the present disclosure, "A/B" and "at least one of A and B" may be interchangeably interpreted. In the present disclosure, "A/B/C" may mean "at least one of A, B, and C."

In the present disclosure, "notify," "activate," "deactivate," "indicate," "select," "configure," "update," "determine," and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, a higher layer signaling may be, for example, any one or combinations of Radio Resource Control (RRC) signaling, Medium Access Control (MAC) signaling, broadcast information, another message (for example, a message from a core network such as a positioning protocol (for example, NR Positioning Protocol A (NRPPa)/LTE Positioning Protocol (LPP)) message), and the like.

In the present disclosure, MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, the following abbreviations may be used.

- radio network temporary identifier: RNTI
- time division multiplexing: TDM
- time-division-multiplexed: TDMed
- frequency division multiplexing: FDM
- frequency-division-multiplexed: FDMed

In the present disclosure, $a_b$, a_b, and an expression of a added with b at the lower right thereof may be interchangeably interpreted. In the present disclosure, $a^c$, a^c, and an expression of a added with c at the upper right thereof may be interchangeably interpreted. In the present disclosure, $a_b^c$, a_b^c, and an expression of a added with b at the lower right thereof and c at the upper right thereof may be interchangeably interpreted. In the present disclosure, ceil(x), a ceiling function, and ceiling may be interchangeably interpreted. In the present disclosure, floor(x), a floor function, and floor may be interchangeably interpreted.

In the present disclosure, a beam, an SSB, an SSB index, a CSI-RS, a CSI-RS resource, a CSI-RS resource index, an RS, QCL assumption, a TCI state, a unified TCI state, a DL or joint TCI state, a UL TCI state, a UL Tx spatial filter, a space domain filter, a space domain transmission filter, a space domain reception filter, an antenna port QCL parameter, a QCL parameter, a Tx beam, and a spatial filter may be interchangeably interpreted.

In the present disclosure, a RACH resource, a RA resource, a PRACH preamble, an occasion, a RACH occasion (RO), a PRACH occasion, a repetition resource, a repetition configuration resource, a resource configured for RO/repetition, a time instance and a frequency instance, a time resource and a frequency resource, a resource of an RO/preamble, repetition, a PRACH resource, a time/frequency resource for PRACH, a configuration/index of a preamble, a configuration/index of a mask, and a PRACH configuration may be interchangeably interpreted.

In the present disclosure, a time occasion, a time domain position, a time position, a PRACH occasion, a PRACH slot, a period, periodicity, a symbol/slot/subframe/frame, an index of at least one of these, a time domain index, and T# may be interchangeably interpreted. In the present disclosure, a frequency domain position, a frequency position, a subcarrier/RE/RB/CC, an index of at least one of these, a frequency domain index, and F# may be interchangeably interpreted. In the present disclosure, an RO, an RO index, and RO# may be interchangeably interpreted.

In the present disclosure, 6G, new radio access, enhancement of 5G, and enhanced 5G may be interchangeably interpreted. In the present disclosure, a RAT, a radio communication method, a radio communication standard, a radio communication system, a network, a base station, and an access point may be interchangeably interpreted.

In the present disclosure, 6G URLLC, URLLC, ultra-low latency operation, low latency operation, operation using a URLLC resource, operation reducing the probability of collision and retransmission, a use case of ultra-low latency, a use case of a combination of ultra-low latency and another requirement, a use case of a combination of ultra-low latency and high reliability, and a use case of a combination of ultra-low latency and multi-connection may be interchangeably interpreted. In the present disclosure, a use, a use case, a channel, a duplex scheme, a link direction, a requirement, a condition, and an operation may be interchangeably interpreted. In the present disclosure, a channel, a UL channel, a PRACH, a PUCCH, and a PUSCH may be interchangeably interpreted. In the present disclosure, a use case, communication, sensing, and positioning may be interchangeably interpreted. In the present disclosure, a duplex scheme, FDD, and TDD may be interchangeably interpreted. In the present disclosure, a link direction, downlink, and uplink may be interchangeably interpreted.

In the present disclosure, a URLLC resource, a UE-dedicated resource, a UE-dedicated resource for URLLC operation, and a UE-dedicated resource in a specific period may be interchangeably interpreted.

(Radio Communication Method)

In each embodiment, it may be assumed that a UE before performing a RA procedure in initial access has no dedicated resource. In all the RA procedures including a RA procedure in initial access, it is difficult to prevent collision completely. However, after an NW has identified a UE individually in a RA procedure, a RA procedure that can prevent collision is possible.

After the NW has identified the UE, the NW or the UE may initiate URLLC operation. For example, after RRC connection, the UE may transmit a request related to the URLLC operation to the NW.

The UE may determine whether to use a terminal-dedicated resource, based on at least one of a request transmitted for the terminal-dedicated resource (for example, a URLLC resource), information received for the terminal-dedicated resource, a state of a terminal, a use of the terminal-dedicated resource, a period related to the terminal-dedicated resource, and an event. The UE may transmit, when determining to use the terminal-dedicated resource, a specific channel (for example, a PRACH/PUCCH/PUSCH) by using the terminal-dedicated resource.

<Embodiment 1>

A UE-dedicated resource for URLLC operation (URLLC resource) may be allocated to a UE. The URLLC operation may be operation for reducing the probability of collision and retransmission with respect to that of 5G operation.

Based on a request from the UE or indication/configuration by a base station, a URLLC resource may be allocated to the UE.

Allocation/state transition of the URLLC resource may be performed based on an existing configuration/new configuration. The new configuration may be a configuration for URLLC. The configuration may be a configuration of an MCS table for URLLC. The UE may switch whether or not to perform URLLC operation, based on another configuration for URLLC.

Together with introduction of a URLLC resource, a new state of the UE may be defined. The state may be a URLLC mode or a URLLC CONNECTED mode, for example. The UE may be in a CONNECTED/IDLE/INACTIVE mode and a URLLC mode simultaneously. The URLLC CONNECTED mode may be a mode for URLLC operation or may be a mode only for a UE supporting URLLC operation. The URLLC CONNECTED mode may be shifted from a CONNECTED/IDLE/INACTIVE mode or may be shifted to a CONNECTED/IDLE/INACTIVE mode.

A URLLC resource may be defined for TDD/FDD. The URLLC resource may be used for TDD and occupy a specific frequency band (over a specific period) as a resource common to DL/UL. The URLLC resource may be used for FDD and allocated to a specific use of either UL or DL.

A URLLC resource may be allocated in a UE-dedicated manner according to one or a combination of two of some of the following methods.

- Method 1: A URLLC resource may be a UE-dedicated resource using time division/frequency division/code division (TDM/FDM/CDM). For example, a specific time/frequency/code resource may be semi-statically allocated as a URLLC resource in a UE-dedicated manner. For example, a specific code resource may be a UE-dedicated RACH preamble.
- Method 2: A URLLC resource may be a UE-dedicated beam. The URLLC resource may be separated in a space domain (SDM) and treated as a UE-dedicated resource.

A concrete parameter for a URLLC resource may be based on information from the UE (for example, a request, a report, a UE capability) or may be indicated to/configured for the UE by an NW. The parameter for a time-division URLLC resource may be information related to timing including at least one of periodicity and an offset. The parameter for a frequency-division URLLC resource may include at least one of a frequency position and presence/absence of frequency hopping. The parameter for a code-division URLLC resource may include at least one of a root index, a shift (cyclic shift) amount, and an SSB index.

The UE may make notification of/report a UE capability indicating whether a URLLC resource is available. The NW may transmit indication/configuration to the UE, based on the UE capability.

Since it is feared, in a use case of low latency and multi-connection, that UE-dedicated resources become insufficient due to requests for URLLC operation by a huge number of devices, URLLC resources may be allocated based on indication/configuration from the NW instead of requests from the UEs.

When uplink transmission timing is periodic in a use such as sensing, necessary and sufficient URLLC resources are secured based on requests from the UEs, which may thereby contribute to device density.

According to this embodiment, a UE can use an appropriate UE-dedicated resource for URLLC operation.

<Embodiment 2>

While a URLLC resource is allocated to a UE, the UE may perform a RA procedure based on the URLLC resource.

In the RA procedure, operation not requiring configuration of a RACH preamble may be defined. The UE may transmit a RACH preamble, based on allocation of the URLLC resource. The URLLC resource may be used for the RACH preamble. The RACH preamble may be a fixed preamble defined in a specification, or may be a preamble based on the configuration of the URLLC resource. The UE may be configured with a plurality of candidates for a UE-dedicated RACH preamble and select one RACH preamble from a plurality of candidates for transmission. The UE may autonomously determine at least one of the number of repetitions and the CP length and transmit a RACH preamble based on the determination.

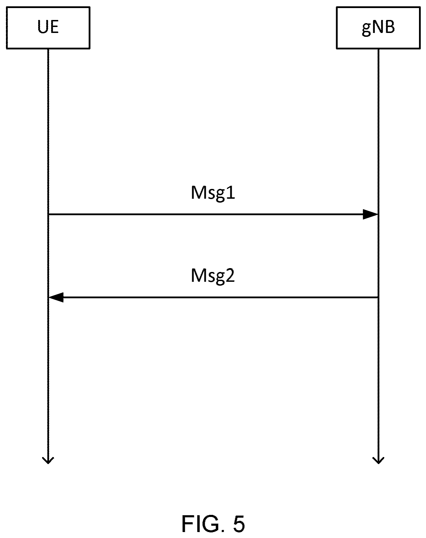

By simplifying an existing RA procedure, based on operation not requiring configuration of a RACH preamble, a 2-step RA procedure may be used (FIG. 5). By omitting ACK (response) from an NW to the UE in a case where an error hardly occurs, a 1-step RA procedure may be used.

A URLLC resource may be used for another signal/channel (for example, an uplink) without being limited to the use of a RA procedure.

According to this embodiment, latency in a RA procedure can be suppressed.

<Embodiment 3>

Allocation/release of a URLLC resource may be triggered by a UE or triggered by a specific event.

The allocation/release of a URLLC resource may follow one or a combination of two or more of the following choices.

- Choice 1

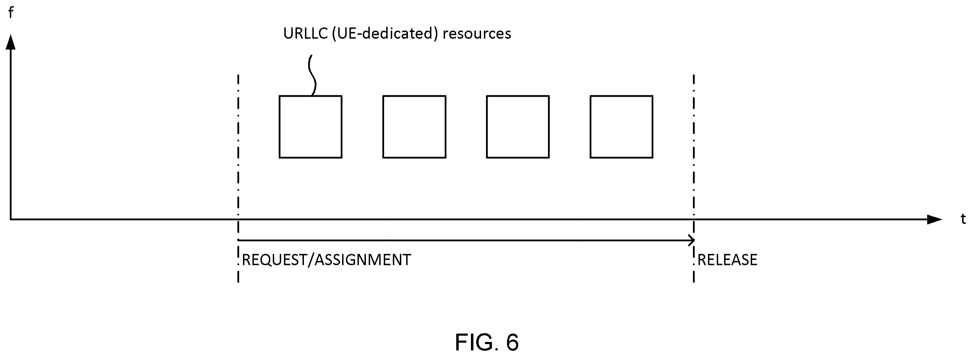

A URLLC resource may be allocated to the UE during a specific period (FIG. 6). The NW may give the URLLC resource to the UE, based on a request from a service. In response to the UE requesting a URLLC resource, the NW/UE may make the URLLC resource valid during the specific period. The specific period may be until the elapse of a specific time from the request/allocation. The specific period/specific time may be defined in a specification or configured for/indicated to the UE by the NW. In response to the end of the specific period, the NW/UE may release the URLLC resource. During the specific period, the UE may use the URLLC resource for a plurality of uses or use for a use other than the RA procedure. The configuration of the URLLC resource may include a use available for the URLLC resource.

- Choice 2

In response to at least one of an error in a channel such as a PDSCH/PUSCH (for example, a data channel, a common channel) being detected, the number of times an error in a channel such as a PDSCH/PUSCH is detected exceeding a threshold, errors in a channel such as a PDSCH/PUSCH exceeding a threshold, received power being lower than a threshold, and communication quality being lower than a threshold, the UE/NW may release a URLLC resource (may regard that the URLLC resource is to be released). For example, when the UE/NW judges that a requirement such as packet delay budget (PDB) is no longer satisfied (the requirement is difficult to be achieved), the UE/NW may release the URLLC resource or make notification of/report/indicate/configure release of the URLLC resource to the NW/UE/higher layer.

- Choice 3

In response to a specific event (for example, an event/information defined in an existing specification), the UE/NW may release a URLLC resource. For example, the UE may release a URLLC resource in response to a PDCCH order. For example, in response to mobility such as handover (HO) or cell reselection (event based on mobility), the UE may release the URLLC resource.

- Choice 4

The NW/UE may request/indicate/configure allocation/release of a URLLC resource explicitly.

Based on the above choices, some of the following examples are conceivable.

- Example 1 (based on choice 1)

The UE may determine allocation/release of a URLLC resource, based on a request for a service. When the UE (physical layer) receives a request related to a URLLC resource/URLLC operation from a higher layer, the UE may transmit a request related to the URLLC resource to the NW. The contents of the request may be a request for the URLLC resource configuration, a request for release of the URLLC resource, or report/notification of the URLLC resource to be used by the UE. The request may be transmitted via a PUCCH, may be transmitted via a PUSCH, or may be transmitted via a MAC CE in a PUSCH.

- Example 2 (based on choice 2)

The UE may determine allocation/release of a URLLC resource, based on a decoding result of a specific PDSCH. The specific PDSCH may be the newest N PDSCH. When the decoding result indicates a success (ACK), the UE may determine allocation of the URLLC resource. When the decoding result indicates a failure (NACK), the UE may determine release of the URLLC resource.

- Example 3 (use of radio link monitoring (RLM) based on choice 2)

The UE may determine allocation/release of a URLLC resource, based on a result of RLM. The result of RLM may be a monitoring result of an RLM-RS. The RLM-RS may be an RS configured for RLM. When the monitoring result indicates X times of out-of-sync (OOS), the UE may determine release of the URLLC resource. When the monitoring result indicates other than this, the UE may determine continuation of allocation of the URLLC resource. After detection of X times of OOS, the UE may report/make notification of release of the URLLC resource to the base station/NW. This report may be transmitted via a PUCCH, may be transmitted via a PUSCH, or may be transmitted via a MAC CE in a PUSCH.

- Example 4 (based on choice 3)

The base station/NW may indicate allocation/release of a URLLC resource, based on a PDCCH order. When the UE has received a PDCCH order (triggering of a PDCCH ordered PRACH), the UE may determine allocation/release of a URLLC resource. The UE may determine allocation/release of a URLLC resource, based on information notified by the PDCCH.

According to this embodiment, a UE/NW can appropriately allocate/release a URLLC resource.

<Embodiment 4>

An NW other than a RAT (NW) providing a URLLC resource may indicate/configure allocation/release of the URLLC resource. The RAT may be an NW of 5G or may be an NW of 6G or a later version.

For example, when URLLC operation is performed in 6G, the UE may be notified of information of indication/-configuration of allocation/release of a URLLC resource by using a radio communication method other than 6G among radio communication methods to be described later (a plurality of radio communication methods including at least one of 4G, 5G, IEEE 802.11, and IEEE 802.15).

According to this embodiment, a UE/NW can appropriately use, while suppressing a procedure/load of the NW using a URLLC resource, the URLLC resource.

<Embodiment 5>

A UE may notify a higher layer of the possibility/result of allocation/release of a URLLC resource.

For example, the UE/NW (physical layer) may notify the higher layer of an error having occurred in a data channel and PDB becoming difficult to be achieved (embodiment 3), a URLLC mode being shifted to another mode (embodiment 1), and the like. For example, when the NW/UE has judged not to be able to achieve a request for allocation of a URLLC resource, the NW/UE may notify the higher layer of the result of the judgment. When the requested URLLC resource is insufficient in terms of area, the request for allocation of the URLLC resource may be judged impossible to be fulfilled.

According to this embodiment, a UE/NW can appropriately recognize allocation/release of a URLLC resource in a higher layer.

<Embodiment 6>

Different operations/parameters may be defined/assumed for a RA procedure using a URLLC resource and a RA procedure not using a URLLC resource. The RA procedure not using a URLLC resource may be an existing RA procedure.

Operation for determining transmission power (for a RACH preamble, a PUSCH, or the like) in a RA procedure using a URLLC resource may be different from operation of determination of transmission power (for a RACH preamble, PUSCH, or the like) in a RA procedure not using a URLLC resource. In the URLLC operation (for example, a use case in which no error is permitted or an error rate is extremely small), operation for gradually increasing transmission power every retransmission is not suitable. Transmission power in the RA procedure using a URLLC resource may be obtained by adding an offset to transmission power in the RA procedure not using a URLLC resource. Transmission power in the RA procedure using a URLLC resource may constantly be the maximum transmission power in the RA procedure not using a URLLC resource (from the beginning).

Contents explicitly transferred in the RA procedure using a URLLC resource may be different from contents explicitly transferred in the RA procedure not using a URLLC resource. By information of part of the contents being notified before the RA procedure using a URLLC resource, the contents explicitly transferred in the RA procedure using a URLLC resource may be less than the contents explicitly transferred in the RA procedure not using a URLLC resource.
According to this embodiment, a UE can appropriately perform a RA procedure using a URLLC resource.

<Supplements>

{Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.
When the notification is performed by a MAC CE, the MAC CE may be identified by a new logical channel ID (LCID) not defined in an existing standard being included in a MAC subheader.
When the notification is performed by DCI, the notification may be performed by a specific field of the DCI, a radio network temporary identifier (RNTI) used for scrambling of cyclic redundancy check (CRC) bits given to the DCI, a format of the DCI, or the like.
Notification of any information to a UE in the above-described embodiments may be performed periodically, semi-persistently, or aperiodically.

{Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.
When the notification is performed by a MAC CE, the MAC CE may be identified by a new LCID not defined in existing standards being included in a MAC subheader.
When the notification is performed by UCI, the notification may be transmitted by using a PUCCH or a PUSCH.
Notification of any information from a UE in the above-described embodiments may be performed periodically, semi-persistently, or aperiodically.

{Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.
At least one of the above-described embodiments may be applied only to a UE that has reported a specific UE capability or that supports the specific UE capability.
The specific UE capability may indicate at least one of the following:

- supporting of specific processing/operation/control/information for at least one of the embodiments above
- supporting of URLLC operation
- supporting of a URLLC resource

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).
The specific UE capability may be capability applied over all the duplex schemes (commonly irrespective of duplex scheme) or capability per duplex scheme (for example, time division duplex (TDD) or frequency division duplex (FDD)).
At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of at least one operation of the above-described embodiments, any RRC parameter for a specific release (for example, Rel. 18/19), or the like.

In Rel. YY (for example, YY is 18 or larger), an RRC parameter enabling operation XXX may be expressed as XXX_rYY (XXX-rYY).

When the UE does not support at least one of the specific UE capabilities above or is not configured with the specific information, operation of Rel. 15/16 may be applied, for example.

(Supplementary Notes)

Regarding one embodiment of the present disclosure, the following supplementary notes of the invention will be given.

{Supplementary Note 1}

A terminal including:

a control section that determines whether to use a terminal-dedicated resource, based on at least one of a request transmitted for the terminal-dedicated resource, information received for the terminal-dedicated resource, a state of the terminal, a use of the terminal-dedicated resource, a period related to the terminal-dedicated resource, and an event; and

a transmitting section that transmits, when the control section determines to use the terminal-dedicated resource, a specific channel by using the terminal-dedicated resource.

{Supplementary Note 2}

The terminal according to supplementary note 1, wherein the specific channel is a random access channel.

{Supplementary Note 3}

The terminal according to supplementary note 1 or 2, wherein the control section determines to use the terminal-dedicated resource or use operation for reducing a probability of collision and retransmission, during the period.

{Supplementary Note 4}

The terminal according to any one of supplementary notes 1 to 3, wherein the control section controls reception of the information from a network other than a network using the specific channel.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

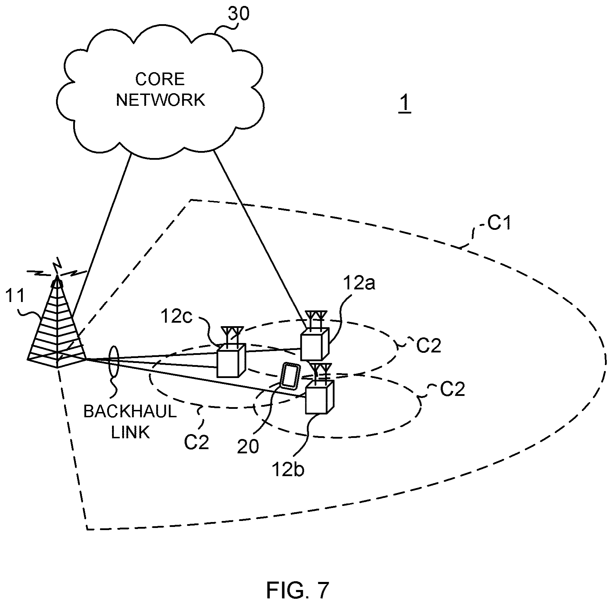

FIG. 7 is a diagram to show an example of a schematic structure of the radio communication system according to one embodiment. A radio communication system 1 (which may simply be referred to as a system 1) may be a system implementing communication using Long Term Evolution (LTE), 5th generation mobile communication system New Radio (5G NR) and so on the specifications of which have been drafted by the Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs) such as User Plane Function (UPF), Access and Mobility management Function (AMF), Session Management Function (SMF), Unified Data Management (UDM), Application Function (AF), Data Network (DN), Location Management Function (LMF), and operation, administration and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

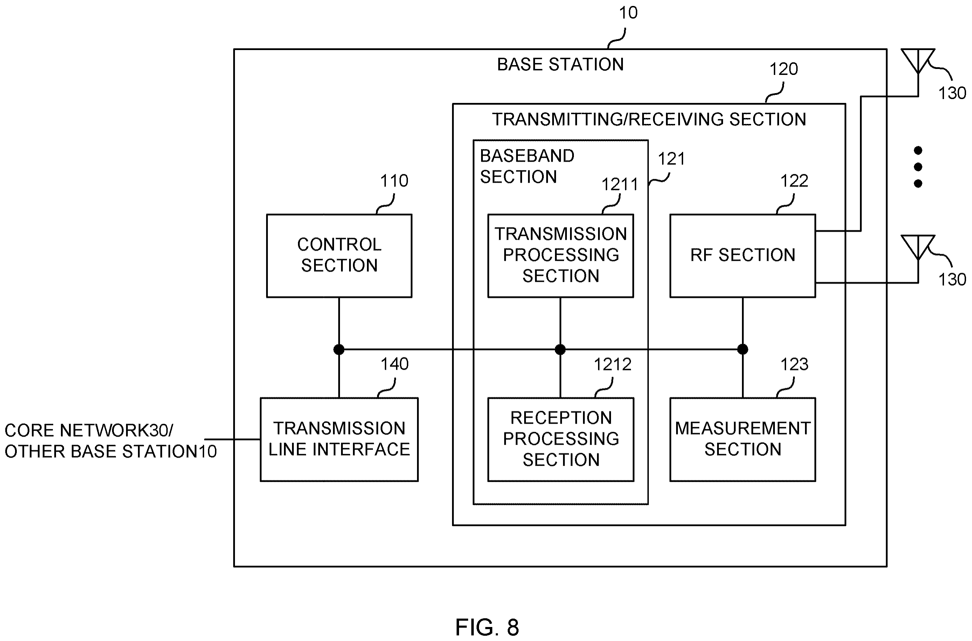

FIG. 8 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus (for example, a network node providing an NF) included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the control section 110 may determine whether to use a terminal-dedicated resource, based on at least one of a request received for the terminal-dedicated resource, information transmitted for the terminal-dedicated resource, a state of a terminal, a use of the terminal-dedicated resource, a period related to the terminal-dedicated resource, and an event. The transmitting/receiving section 120 may receive, when determining to use the terminal-dedicated resource, a specific channel by using the terminal-dedicated resource.

(User Terminal)

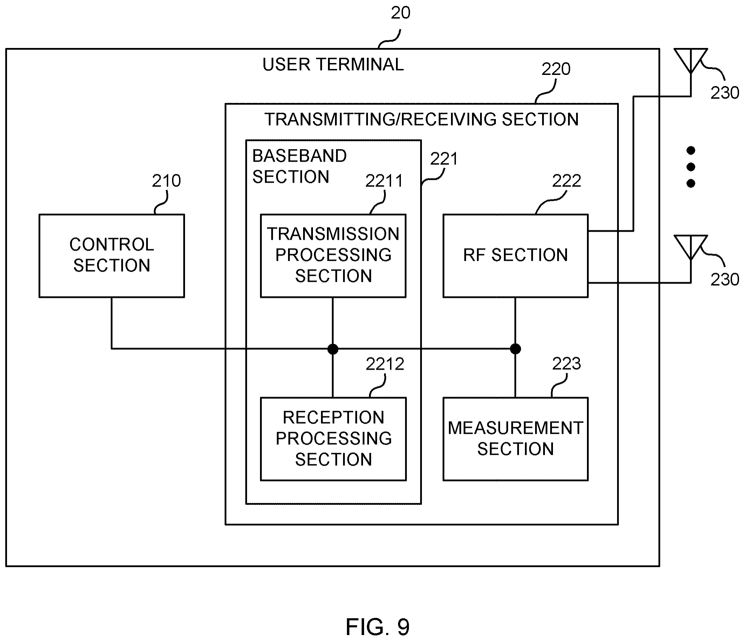

FIG. 9 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be a non zero power (NZP) CSI-RS resource, for example. The measurement section 223 may derive interference measurement for CSI calculation, based on a resource for interference measurement. A resource for interference measurement may be at least one of an NZP CSI-RS resource for interference measurement, a CSI-interference measurement (IM) resource, and the like. Note that CSI-IM may be referred to as CSI-interference management (IM), or CSI-IM and a zero power (ZP) CSI-RS may be interchangeably interpreted. Note that, in the present disclosure, a CSI-RS, an NZP CSI-RS, a ZP CSI-RS, CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

Note that the control section 210 may determine whether to use a terminal-dedicated resource, based on at least one of a request transmitted for the terminal-dedicated resource, information received for the terminal-dedicated resource, a state of the terminal, a use of the terminal-dedicated resource, a period related to the terminal-dedicated resource, and an event. The transmitting/receiving section 220 may transmit, when determining to use the terminal-dedicated resource, a specific channel by using the terminal-dedicated resource.

The specific channel may be a random access channel.

The control section 210 may determine to use the terminal-dedicated resource or use operation for reducing a probability of collision and retransmission, during the period.

The control section 210 may control reception of the information from a network other than a network using the specific channel.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

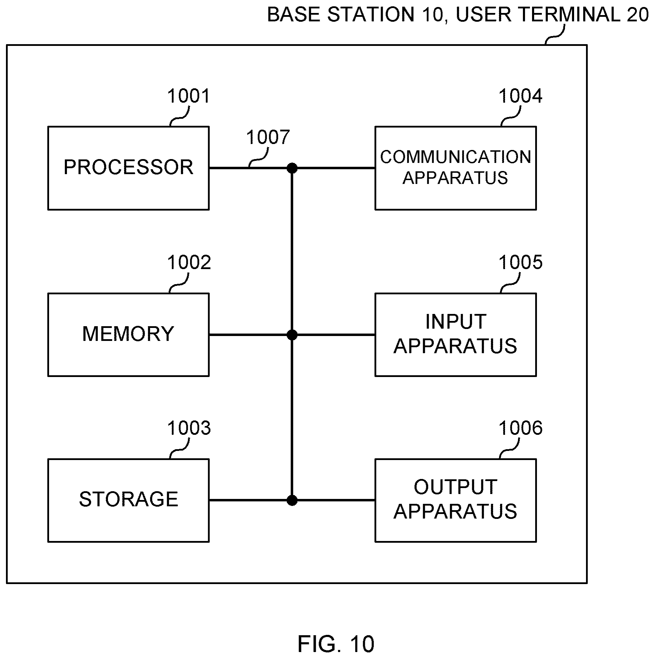

For example, a base station, a user terminal, and so on according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station" a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

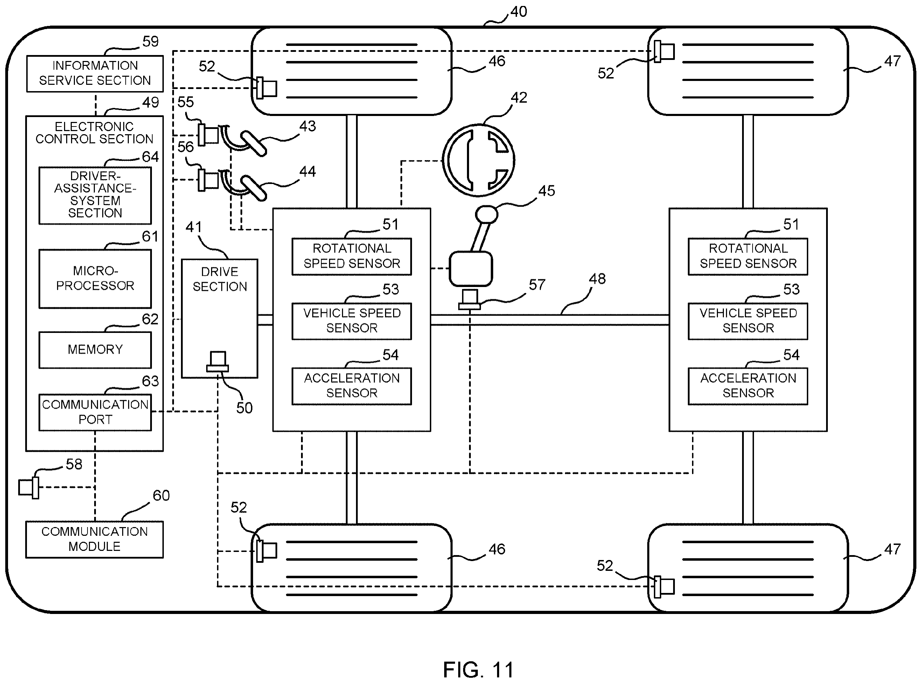

FIG. 11 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

**Claims**

**1.** A terminal comprising:

a control section that determines whether to use a terminal-dedicated resource, based on at least one of a request transmitted for the terminal-dedicated resource, information received for the terminal-dedicated resource, a state of the terminal, a use of the terminal-dedicated resource, a period related to the terminal-dedicated resource, and an event; and
a transmitting section that transmits, when the control section determines to use the terminal-dedicated resource, a specific channel by using the terminal-dedicated resource.

**2.** The terminal according to claim 1, wherein
the specific channel is a random access channel.

**3.** The terminal according to claim 1, wherein
the control section determines to use the terminal-dedicated resource or use operation for reducing a probability of collision and retransmission, during the period.

**4.** The terminal according to claim 1, wherein
the control section controls reception of the information from a network other than a network using the specific channel.

**5.** A radio communication method for a terminal, the radio communication method comprising:

determining whether to use a terminal-dedicated resource, based on at least one of a request transmitted for the terminal-dedicated resource, information received for the terminal-dedicated resource, a state of the terminal, a use of the terminal-dedicated resource, a period related to the terminal-dedicated resource, and an event; and
transmitting, when it is determined to use the terminal-dedicated resource, a specific channel by using the terminal-dedicated resource.

**6.** A base station comprising:

a control section that determines whether to use a terminal-dedicated resource, based on at least one of a request received for the terminal-dedicated resource, information transmitted for the terminal-dedicated resource, a state of a terminal, a use of the terminal-dedicated resource, a period related to the terminal-dedicated resource, and an event; and

a receiving section that receives, when the control section determines to use the terminal-dedicated resource, a specific channel by using the terminal-dedicated resource.

CBRA
UE
gNB
Msg1 (Random Access Preamble)
Msg2 (Random Access Response)
Msg3 (PUSCH transmission)
Msg4 (Contention Resolution)

FIG. 1

```
RACH-ConfigCommon ::=                    SEQUENCE {
      rach-ConfigGeneric                            RACH-ConfigGeneric,
      totalNumberOfRA-Preambles                     INTEGER (1..63)      OPTIONAL,     -- Need S
      ssb-perRACH-OccasionAndCB-PreamblesPerSSB     CHOICE {
            oneEighth     ENUMERATED {n4,n8,n12,n16,n20,n24,n28,n32,n36,n40,n44,n48,n52,n56,n60,n64},
      //oneEighth corresponds to one SSB associated with 8 RACH occasions;
         n4 corresponds to 4 Contention Based preambles per SSB
            oneFourth     ENUMERATED {n4,n8,n12,n16,n20,n24,n28,n32,n36,n40,n44,n48,n52,n56,n60,n64},
            oneHalf                                 ENUMERATED
{n4,n8,n12,n16,n20,n24,n28,n32,n36,n40,n44,n48,n52,n56,n60,n64},
            one                                     ENUMERATED
{n4,n8,n12,n16,n20,n24,n28,n32,n36,n40,n44,n48,n52,n56,n60,n64},
            two                                     ENUMERATED {n4,n8,n12,n16,n20,n24,n28,n32},
            four                                    INTEGER (1..16),
            eight                                   INTEGER (1..8),
            sixteen                                 INTEGER (1..4)
      }
...
 }

RACH-ConfigGeneric ::=                  SEQUENCE {
      prach-ConfigurationIndex                INTEGER (0..255),
      msg1-FDM                                ENUMERATED {one, two, four, eight},
      msg1-FrequencyStart                     INTEGER (0..maxNrofPhysicalResourceBlocks-1),
      zeroCorrelationZoneConfig               INTEGER(0..15),
      preambleReceivedTargetPower             INTEGER (-202..-60),
      preambleTransMax                        ENUMERATED {n3, n4, n5, n6, n7, n8, n10, n20, n50, n100, n200},
      powerRampingStep                        ENUMERATED {dB0, dB2, dB4, dB6},
      ra-ResponseWindow                       ENUMERATED {sl1, sl2, sl4, sl8, sl10, sl20, sl40, sl80},
      ...,
}
```

FIG. 2

FIG. 3A
FREQUENCY
TIME
RO
SSB#1
SSB#1
SSB#0
SSB#0
SSB#3
SSB#3
SSB#2
SSB#2
...
SSB#63
SSB#63
SSB#62
SSB#62
preamble index for SSB#0: 0-15
FIG. 3B
FREQUENCY
TIME
RO
SSB#12-15
SSB#8-11
SSB#4-7
SSB#0-3
SSB#28-31
SSB#24-27
SSB#20-23
SSB#16-19
...
SSB#60-63
SSB#56-59
SSB#52-55
SSB#48-51
preamble index for SSB#0: 0-15
preamble index for SSB#1: 16-31
preamble index for SSB#2: 32-47
preamble index for SSB#3: 48-63

CFRA
UE
gNB
Random Access Preamble Assignment
Msg1 (Random Access Preamble)
Msg2 (Random Access Response)

FIG. 4

UE
gNB
Msg1
Msg2

FIG. 5

t
RELEASE
URLLC (UE-dedicated) resources
REQUEST/ASSIGNMENT
f

FIG. 6

30
CORE
NETWORK
1
C1
11
12a
12c
C2
C2
BACKHAUL
LINK
C2
20
12b

FIG. 7

10
BASE STATION
120
TRANSMITTING/RECEIVING SECTION
BASEBAND SECTION
121
110
1211
122
130
CONTROL SECTION
TRANSMISSION PROCESSING SECTION
RF SECTION
130
140
1212
123
CORE NETWORK30/
OTHER BASE STATION10
TRANSMISSION LINE INTERFACE
RECEPTION PROCESSING SECTION
MEASUREMENT SECTION

FIG. 8

230
230
20
USER TERMINAL
220
TRANSMITTING/RECEIVING SECTION
222
RF SECTION
223
MEASUREMENT SECTION
221
BASEBAND SECTION
2211
TRANSMISSION PROCESSING SECTION
2212
RECEPTION PROCESSING SECTION
210
CONTROL SECTION

FIG. 9

BASE STATION 10, USER TERMINAL 20
1001
PROCESSOR
1007
1004
COMMUNICATION APPARATUS
1002
MEMORY
1005
INPUT APPARATUS
1003
STORAGE
1006
OUTPUT APPARATUS

FIG. 10

40
59
INFORMATION SERVICE SECTION
49
ELECTRONIC CONTROL SECTION
64
DRIVER-ASSISTANCE-SYSTEM SECTION
61
MICRO-PROCESSOR
62
MEMORY
63
COMMUNICATION PORT
58
60
COMMUNICATION MODULE
41
DRIVE SECTION
50
42
43
44
45
46
46
47
47
48
51
ROTATIONAL SPEED SENSOR
53
VEHICLE SPEED SENSOR
54
ACCELERATION SENSOR
51
ROTATIONAL SPEED SENSOR
53
VEHICLE SPEED SENSOR
54
ACCELERATION SENSOR
52
52
52
52
55
56
57

FIG. 11

**INTERNATIONAL SEARCH REPORT**

International application No. **PCT/JP2023/015381**

**A. CLASSIFICATION OF SUBJECT MATTER**

***H04W 72/512***(2023.01)i; ***H04W 48/16***(2009.01)i; ***H04W 74/08***(2024.01)i
FI: H04W72/512; H04W48/16 130; H04W74/08

According to International Patent Classification (IPC) or to both national classification and IPC

**B. FIELDS SEARCHED**

Minimum documentation searched (classification system followed by classification symbols)

H04W72/512; H04W48/16; H04W74/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2016/142979 A1 (NEC CORPORATION) 15 September 2016 (2016-09-15) abstract, claims 16, 23, 24, paragraphs [0001]-[0009], [0018]-[0083], fig. 1-13 | 1, 4-6 |
| Y | | 2, 3 |
| Y | WO 2018/116910 A1 (SHARP KABUSHIKI KAISHA) 28 June 2018 (2018-06-28) abstract, claims 1, 2, paragraphs [0038], [0055]-[0058], [0082]-[0086], [0090], fig. 8-10 | 2, 3 |

☐ Further documents are listed in the continuation of Box C. ☑ See patent family annex.

* Special categories of cited documents:
“A” document defining the general state of the art which is not considered to be of particular relevance
“E” earlier application or patent but published on or after the international filing date
“L” document which may throw doubts on priority claim(s) or which is cited to establish the publication date of another citation or other special reason (as specified)
“O” document referring to an oral disclosure, use, exhibition or other means
“P” document published prior to the international filing date but later than the priority date claimed
“T” later document published after the international filing date or priority date and not in conflict with the application but cited to understand the principle or theory underlying the invention
“X” document of particular relevance; the claimed invention cannot be considered novel or cannot be considered to involve an inventive step when the document is taken alone
“Y” document of particular relevance; the claimed invention cannot be considered to involve an inventive step when the document is combined with one or more other such documents, such combination being obvious to a person skilled in the art
“&” document member of the same patent family

| Date of the actual completion of the international search | Date of mailing of the international search report |
|---|---|
| **27 October 2023** | **07 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/015381**

| Patent document cited in search report | Publication date (day/month/year) | Patent family member(s) | Publication date (day/month/year) |
|---|---|---|---|
| WO 2016/142979 A1 | 15 September 2016 | US 2018/0035430 A1<br>abstract, claims 16, 23, 24, paragraphs [0001]-[0009], [0040]-[0105], fig. 1-13<br>EP 3267747 A1 | |
| WO 2018/116910 A1 | 28 June 2018 | US 2019/0313309 A1<br>abstract, claims 6, 7, paragraphs [0057], [0076]-[0079], [0103]-[0107], [0111], fig. 8-10<br>EP 3562210 A1<br>CN 109997385 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010